# FASCICULE DE BREVET EUROPEEN

(11) **EP 0 758 295 B1**
(45) Date de publication et mention de la délivrance du brevet: **23.09.1998**
(21) Numéro de dépôt: 95919481.2
(22) Date de dépôt: 05.05.1995
(51) Int. Cl.: B31F 1/28

(54) **MACHINE ET PROCEDE DE FABRICATION D'UNE FEUILLE DE CARTON ONDULE SIMPLE FACE PAR ENCOLLAGE SOUS TRACTION**
VORRICHTUNG UND VERFAHREN ZUR HERSTELLUNG EINER EINSEITIG BEKLEBTEN WELLPAPPE DURCH ANGETRIEBENES LEIMUNGSVERFAHREN
MACHINE AND METHOD OF MANUFACTURE OF SINGLE-FACE CORRUGATED BOARD BY TRACTION GLUEING

(30) Priorité: 06.05.1994 FR 9405611
(43) Date de publication de la demande: 19.02.1997
(73) Titulaire: OTOR, 75017 Paris (FR)
(72) Inventeur: BARNY, Jean-Jacques, F-69400 Villefranche (FR); PAULTES, Jean-Marie, F-75015 Paris (FR); BAILLET, Louis, F-16420 Brigueuil (FR)
(74) Mandataire: Benech, Frédéric
(86) Numéro de dépôt international: FR9500586
(87) Numéro de publication internationale: WO9530537

(56) Documents cités:
- EP-A- 0 064 939
- EP-A- 0 492 310
- EP-A- 0 559 556
- DE-A- 2 527 819
- US-A- 2 638 962

## Description

La présente invention concerne la fabrication du carton ondulé et plus particulièrement une machine de fabrication d'une feuille de carton ondulée simple face par encollage d'une feuille cannelée de carton sur une feuille plane de carton dite feuille de couverture, du type comprenant trois cylindres chauffants sensiblement tangents deux à deux, d'axes parallèles, à savoir un premier cylindre cannelé, de préformation de la feuille cannelée, un deuxième cylindre, cannelé, central, associé à des moyens d'application de la feuille cannelée contre la paroi externe dudit deuxième cylindre en amont du premier contact entre feuille plane et feuille cannelée, et un troisième cylindre, lisse, d'amenée de la feuille plane en contact avec les cannelures de la feuille cannelée à la périphérie du deuxième cylindre, ainsi que des moyens d'encollage des cannelures avant contact entre feuille plane et feuille cannelée.

Elle concerne également un procédé de fabrication de feuilles de carton ondulé simple face utilisant notamment une machine du type ci-dessus.

Elle trouve une application particulièrement importante bien que non exclusive dans le domaine de la fabrication de feuille simple face à haute vitesse, par exemple avec du carton obtenu à partir de papier recyclé à faible grammage (inférieur à de l'ordre de 150 g/m²).

On connaît déjà des machines du type ci-dessus défini.

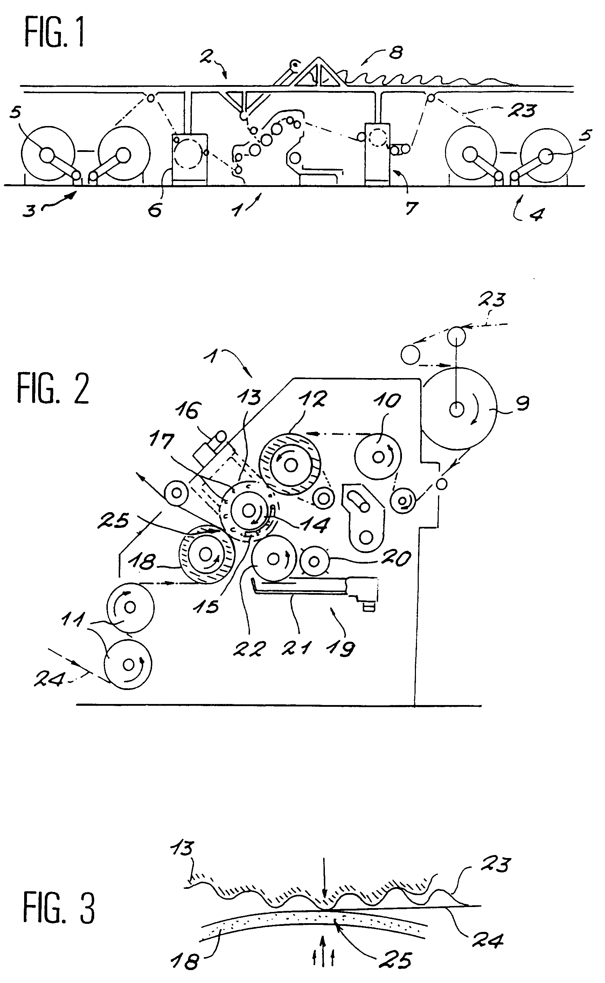

On a ainsi représenté sur la figure 1 une machine 1 de l'art antérieur dans une chaîne de fabrication 2 de carton ondulé simple face.

La chaîne comprend des moyens d'alimentation 3 et 4 respectivement en feuille plane, de couverture, et en feuille plane destinée à former la feuille cannelée.

Ces moyens d'alimentation comprennent, de façon connue en elle-même, des dérouleurs de bobines 5 qui permettent un bon contrôle du déroulement et du freinage nécessaires à la fabrication du carton.

Ils comprennent également un préchauffeur 6, pour la feuille de couverture, en général constitué d'un cylindre en acier chauffé à la vapeur et muni de petits rouleaux dits "embarreurs" qui servent à faire varier la surface de contact papier/cylindre, et un préconditionneur 7 pour la feuille cannelée, qui comporte quant-à-lui, et en outre, une rampe d'humidification de la feuille qui favorise la formation des cannelures.

La chaîne 2 comprend par ailleurs des moyens d'évacuation 8 du carton simple face obtenu, constitués par un système de courroies en partie haute de la chaîne.

La figure 2 montre plus précisément, en vue en coupe, la machine 1 simple face de la chaîne de la figure 1.

Elle comprend, du côté de l'alimentation en feuille cannelée, un cylindre préchauffeur supplémentaire 9 et un cylindre humidificateur 10, et du côté de l'alimentation en feuille de couverture, deux cylindres préchauffeurs tournants 11.

La machine 1 comprend par ailleurs un premier cylindre 12, cannelé, supérieur, en acier inoxydable. Il est creux et agencé pour être chauffé à la vapeur de façon connue en elle-même.

La machine 1 comprend également un deuxième cylindre 13, cannelé, central, en acier inoxydable, d'axe parallèle à celui du premier cylindre sensiblement tangent à ce dernier, et par exemple de même diamètre.

Le deuxième cylindre est par exemple du type connu sous la dénomination "Air Drive", fabriqué par la société française MARTIN.

Il comporte deux chambres, à savoir une chambre centrale chauffée à la vapeur et une chambre à vide 15 connectée à un dispositif 16 de mise sous vide. La chambre comprend des canaux 17 percés sur toute la longueur du cylindre et communiquant avec la surface périphérique cannelée par des trous.

La machine 1 comprend un troisième cylindre 18 inférieur, de surface lisse, d'axe parallèle aux deux premiers et par exemple de même diamètre. Ce cylindre est chauffé à la vapeur de façon similaire aux deux premiers et est agencé pour venir comprimer la feuille de couverture contre les arêtes des cannelures de la feuille cannelée, en contact avec la périphérie du cylindre cannelé central, comme on va le voir.

La machine 1 comprend par ailleurs des moyens 19 d'encollage des crêtes des cannelures, connus en eux-même, comprenant un rouleau lamineur 20, un bac de colle 21 et un rouleau encolleur 22.

Le principe de fonctionnement de la machine 1 est le suivant.

Deux feuilles ou nappes de papier en carton 23 et 24 sont introduits dans la machine 1.

La feuille 23 est destinée à former la feuille cannelée.

Après traitement de séchage et d'humidification en 7, 9 et 10, elle passe autour du premier cylindre chauffant cannelé 12, sur une partie de sa périphérie.

Elle est ensuite introduite entre les deux cylindres chauffants cannelés 12 et 13 qui tournent en sens inverse l'un de l'autre, comme deux cylindres d'engrenage.

Le vide créé dans la partie inférieure du cylindre 13 plaque alors la feuille 23 cannelée formée contre le cylindre chauffant sur un arc de cercle ayant un angle au sommet égal à de l'ordre de 180°.

Lors du passage en face du rouleau colleur 22, une ligne de colle est, par ailleurs et comme on l'a vu, déposée à la crête des cannelures.

La colle est par exemple à base d'amidon.

La feuille de couverture 24 est quant à elle introduite en partie basse et à l'opposé de la machine 1.

Elle est préséchée en 11 et enroulée autour du troisième cylindre 18, également appelé presse lisse. Une pression hydraulique très forte, par exemple de 5 kg/cm (pression linéïque), assure un contact successif en 25 (voir figure 3) entre chaque arête supérieure des cannelures de la feuille cannelée 23 et la feuille de couverture 24 en papier lisse.

Le joint de colle est donc obtenu par l'action conjuguée de la forte pression et de la température en une fraction de seconde.

La feuille cannelée est entraînée par l'engrènement des cylindres cannelés 12 et 13, et la feuille de couverture est entraînée par serrage entre le cylindre central 13 et le cylindre lisse 18, aucune traction en aval des trois cylindres n'étant réalisée. Le carton ondulé est ensuite évacué en partie haute de façon connue en elle même par tapis roulant.

D'autres types de machines simple face existent, comme par exemple celles où la feuille cannelée est plaquée par de l'air au lieu d'être aspirée par le vide sur le cylindre central.

Leur principe de fonctionnement et les éléments structurels qu'ils mettent en oeuvre restent cependant sensiblement identiques à ceux décrits ci-dessus.

Bien qu'elles permettent d'atteindre de fortes cadences en donnant un papier simple face acceptable, les machines connues présentent cependant toujours des inconvénients.

En particulier, pour obtenir un bon collage, ce qui est le but recherché si l'on veut un carton ondulé de bonne qualité, on a essentiellement considéré, jusqu'à ce jour, qu'il était nécessaire d'appliquer les deux feuilles l'une sur l'autre avec une très forte pression, étant par ailleurs entendu qu'une température suffisante est maintenue au moment du collage pour permettre la gélatinisation de la colle.

Malheureusement et notamment cette pression présente des effets nuisibles.

Elle est en effet appliquée sur la partie supérieure des crêtes des cannelures (voir figure 3), ce qui provoque des coupures du carton en particulier aux vitesses de résonances, ou encore à hautes vitesses.

De plus l'application du cylindre presseur 18 sur le cylindre cannelé central 13 se faisant de façon discontinue, d'une cannelure à une autre, des vibrations et un bruit important (105 à 110 décibels à haute vitesse) sont générès.

Il en résulte un carton ondulé de mauvaise qualité, dont les caractéristiques de résistance à l'humidité et à l'éclatement de la couverture, par exemple, sont amoindries.

On connaît également (EP 0 559 556) un dispositif de fabrication de carton ondulé comportant des moyens autorisant l'enroulement du carton sur un arc de cercle du cylindre cannelé central et des moyens de chauffage disposé en aval.

Un tel dispositif spécifiquement appliqué aux feuilles de cartons assemblées bout à bout exclut cependant toute possibilité de traction de la feuille de couverture en aval et ne peut donc fonctionner qu'avec des rouleaux de papier de faible poids.

De même, on connaît (US-A-2 638 962 et US-A-4 481 066) l'utilisation de courroies d'évacuation du papier une fois formé, ou de table aspirante pour éviter le cisaillage entre feuille de couverture et feuille ondulée au niveau du joint de colle.

De tels dispositif ou procédé nécessitent cependant un organe de pression sur plusieurs cannelures adjacentes du cylindre cannelé central, avec l'usure et la difficulté de mise en oeuvre inhérentes à de tels moyens.

La présente invention vise à fournir une machine et un procédé de fabrication de carton ondulé simple face répondant mieux que ceux antérieurement connus aux exigences de la pratique, notamment en ce qu'elle permet de supprimer les coupures de papier aux vitesses de résonance et/ou à haute vitesse c'est-à-dire par exemple supérieure à 300 m/mn, et en ce qu'elle permet d'obtenir un excellent collage, ce qui produit un carton ondulé de performance améliorée et ce pour un coût faible et de façon aisée à mettre en oeuvre.

Les machines existantes peuvent par ailleurs être facilement adaptées pour profiter de l'amélioration que constitue la présente invention.

Pour ce faire, la présente invention part d'une idée consistant notamment a minimiser ou supprimer la pression, entre le cylindre 12 cannelé et le cylindre 18 lisse sur la surface de contact entre les feuilles, en remplaçant la forte pression par un chauffage prolongé des feuilles l'une contre l'autre, tout en exerçant simultanément une traction constante ou sensiblement constante en aval sur la feuille plane de carton ondulée formée, ladite traction permettant par ailleurs de plaquer ladite feuille de carton ondulé sur le cylindre cannelé.

Dans ce but la présente invention propose notamment une machine de fabrication d'une feuille de carton ondulé simple face par encollage d'une feuille cannelée de carton sur une feuille plane de carton, selon la revendication 1.

Autrement dit, les moyens d'entraînement positif vont plaquer la feuille de carton sur le cylindre central cannelé avec une force ayant une composante radiale dirigée vers le centre du cylindre central, par exemple comprise entre 0,1 et 3N/cm, par exemple de 1N/cm.

Dans des modes de réalisation avantageux, on a de plus recours à l'une et/ou à l'autre des dispositions suivantes :
- les moyens de chauffage complémentaire du carton ondulé sont dissociés des moyens d'entraînement positif et situés en amont desdits moyens d'entraînement positif ;
- les moyens d'entraînement positif sont éloignés du cylindre central de sorte que le carton ondulé s'étend sur une partie droite entre les deux, de longueur supérieure à plusieurs centimètres, par exemple égale à de l'ordre de 20 cm, 53 cm ou 1m. Une telle disposition permet à la colle de bien pénétrer le papier;
- le dispositif comprend des moyens agencés pour réguler la température du papier et donc des cylindres chauffants en fonction de la vitesse de rotation de cylindres, pour conserver une transmission de chaleur constante.
   Pour ce faire, il est par exemple prévu plusieurs capteurs de température infrarouge, agencé pour commander les moteurs d'entraînement des cylindres par un système d'avertissement connu en lui même ;
- les moyens d'entraînement positif par traction de la feuille de carton ondulé et les moyens complémentaires de chauffage comprennent un quatrième cylindre chauffant, muni de moyens d'application de la feuille de carton ondulé contre la paroi externe dudit quatrième cylindre, d'axe parallèle aux autres cylindres, ledit quatrième cylindre étant agencé pour être lui-même en contact avec le dos de la feuille plane sur un arc de cercle correspondant à un angle au centre béta d'une seconde valeur déterminée supérieure à zéro.

Compte tenu de l'utilisation de moyens d'application de la feuille de carton ondulé contre la paroi du quatrième cylindre, il s'en suit une impossibilité ou une quasi impossibilité de glissement du carton ondulé au niveau des moyens d'entraînement positif (tolérance de l'ordre de +5% maximum).

D'autres moyens d'entrainement positif peuvent par ailleurs être prévus, comme par exemple des rouleaux pinceant élastiquement entre eux le carton ondulé directement en aval du deuxième cylindre, simultanément ou après le chauffage complémentaire.

Avantageusement le quatrième cylindre est agencé pour plaquer la feuille cannelée sur ledit deuxième cylindre en aval dudit premier contact entre feuilles plane et cannelée.
- les moyens d'application associés au quatrième cylindre sont des moyens d'aspiration du carton ondulé, par l'intermédiaire d'orifices percés dans la surface de la paroi dudit quatrième cylindre, le quatrième cylindre étant à surface lisse ou sensiblement lisse sur toute sa périphérie.
- la seconde valeur déterminée est comprise entre de l'ordre de 90° et de l'ordre de 270°;
- la seconde valeur déterminée est de l'ordre de 180°;
- les moyens d'entraînement positif comportent des moyens d'actionnement en rotation du quatrième cylindre à une vitesse déterminée comprise entre de l'ordre de 1 et de l'ordre de 1,05 fois la vitesse de rotation du deuxième cylindre, par exemple 1,03 fois.

Avantageusement, la sur-vitesse du quatrième cylindre ou des autres types de moyens d'entraînement, s'il y a lieu, est inférieure à 1%, par exemple égale à de l'ordre de 0,5% de la vitesse du deuxième cylindre ou de la vitesse de défilement du carton. Cette sur-vitesse permet de tenir compte de l'usure des cylindres et augmente la durée d'utilisation de ces derniers;
- le quatrième cylindre chauffant est de même diamètre que les trois premiers cylindres chauffants;
- les moyens d'entraînement positif et le deuxième cylindre sont agencés pour permettre le réglage de l'angle alpha d'enroulement de la feuille de carton ondulé sur le deuxième cylindre.

Une telle disposition permet de régler la chauffe du carton ondulé formé en fonction de la vitesse de défilement, ce qui permet notamment d'éviter une cuisson du carton, par exemple en début de fabrication ou en fin de fabrication du carton ondulé;
- le quatrième cylindre est agencé pour permettre le réglage de l'angle béta d'enroulement de la feuille de carton ondulé sur le quatrième cylindre;
- la machine comporte de plus un cylindre lisse de petit diamètre, d'axe parallèle à l'axe des cylindres chauffants, situé en aval des cylindres sur le trajet du carton ondulé et en dessous du plan horizontal tangent à la génératrice supérieure du quatrième cylindre;
- la première valeur déterminée alpha est supérieure à de l'ordre de 30°, et avantageusement supérieure à 100°;
- la première valeur déterminée correspond à une dimension d'arc en surface du deuxième cylindre supérieure à de l'ordre de 50 mm;
- la machine comporte des moyens de réglage de la pression exercée sur la feuille de carton ondulée au niveau du deuxième cylindre, par le troisième cylindre lisse, en dessous d'une valeur seuil déterminée de 3 kg/cm;
- la machine comporte des moyens de réglage de la distance entre les surfaces des deuxième et troisième cylindres, lesdits moyens étant agencés pour supprimer toute pression du troisième cylindre sur les feuilles cannelée et plane de couverture de la feuille ondulée, en contact avec le deuxième cylindre, en cours de fonctionnement de la machine.

Aucun contact n'existe donc entre deuxième et troisième cylindres.

Les moyens de réglage sont par exemple des moyens écarteur entre périphérie de cylindre, connus en eux-même.

Un tel système donne en effet des résultats excellents à des vitesses de déroulement du carton supérieure à 200 m/mn.

L'invention propose également un procédé de fabrication d'une feuille de carton ondulé simple face, utilisant une machine telle que décrite ci-dessus.

Elle propose également un procédé de fabrication d'une feuille de carton ondulé simple face selon la revendication 16.

Dans des modes de réalisation avantageux, on a de plus recours à l'une et/ou à l'autre des dispositions suivantes:
- on chauffe de façon complémentaire en amont par rapport aux moyens d'entraînement positif;
- on exerce ladite traction et on chauffe de façon complémentaire par l'intermédiaire d'un quatrième cylindre chauffant, rotatif, situé en aval du trajet du carton ondulé par rapport au deuxième cylindre cannelé central, en plaquant ladite feuille de couverture contre une portion de surface dudit quatrième cylindre, sur un arc correspondant à un angle au centre béta d'une seconde valeur déterminée;
- la seconde valeur déterminée est comprise entre de l'ordre de 90° et de l'ordre de 270°;
- la seconde valeur déterminée est de l'ordre de 180°;
- la vitesse dudit quatrième cylindre chauffant est comprise entre de l'ordre de 1 et de l'ordre de 1,05 fois la vitesse de rotation dudit deuxième cylindre cannelé central;
- la première valeur déterminée est supérieure à de l'ordre de 30°, et avantageusement supérieure à de l'ordre de 100°;
- aucune pression externe n'est exercée par les moyens d'amenée de la feuille plane de couverture(pour encollage sur la feuille cannelée au niveau du cylindre cannelé central;)
- on règle l'angle alpha d'enroulement de la feuille de carton ondulé sur le cylindre cannelé central, par déplacement respectif des moyens d'entrainement positif par rapport audit cylindre cannelé central;
- on règle l'angle béta d'enroulement du carton ondulé sur le second cylindre situé en aval du trajet du carton ondulé par rapport au cylindre cannelé central.

Advantageusement L'invention est applicable à un procédé de fabrication d'une feuille de carton ondulé simple face à partir d'une feuille de carton cannelée présentant des cannelures de type B, C ou E, et d'une feuille plane de carton, dite de couverture, par encollage de l'une sur l'autre, lesdites feuilles étant constituées à partir de papier de grammage inférieur à 140 g, avantageusement inférieur à 100g et/ou avantageusement compris entre de l'ordre de 80 g et de l'ordre de 130 g, caractérisé en ce que la vitesse de défilement du carton lors de ladite fabrication est supérieure à 250 m/mn, avantageusement supérieure à 350 m/mn, de préférence supérieure à 400 m/mn et encore plus préférentiellement supérieur à 450 m/mn, voire à 500 m/mn.

Les cannelures de types B, C et E correspondent à la norme française NF Q 12-008. Elles sont notamment définies de la façon suivante, e étant l'épaisseur hors tout du carton ondulé en mm:
- type B : petite cannelure, 2 < e ≤ 3,5 ;
- type C : moyenne cannelure, 3,5 < e ≤ 4,5 -
- type E : micro-cannelure, e ≤ 2.

L'invention sera mieux comprise à la lecture de la description qui suit d'un mode de réalisation, donnée à titre d'exemple non limitatif.

La description se réfère aux dessins qui l'accompagnent, dans lesquels, en plus des figures 1 à 3 d'ores et déjà décrites concernant une machine de l'art antérieur :
- La figure 4 montre schématiquement un mode de réalisation de l'amélioration que constitue l'invention, en coupe transversale.
- La figure 5 est une vue en coupe longitudinale selon V-V, également en partie écorchée, du quatrième cylindre de la figure 4.
- Les figures 6, 7 et 8 sont des schémas donnant les caractéristiques de résistance à l'éclatement de différentes qualités de papier de carton ondulé double face, utilisant un papier simple face obtenu à partir d'une machine connue du type de celle décrite en référence à la figure 1, (en trait interrompu) et à partir de la machine selon l'invention (en trait plein), en fonction des vitesses de défilement

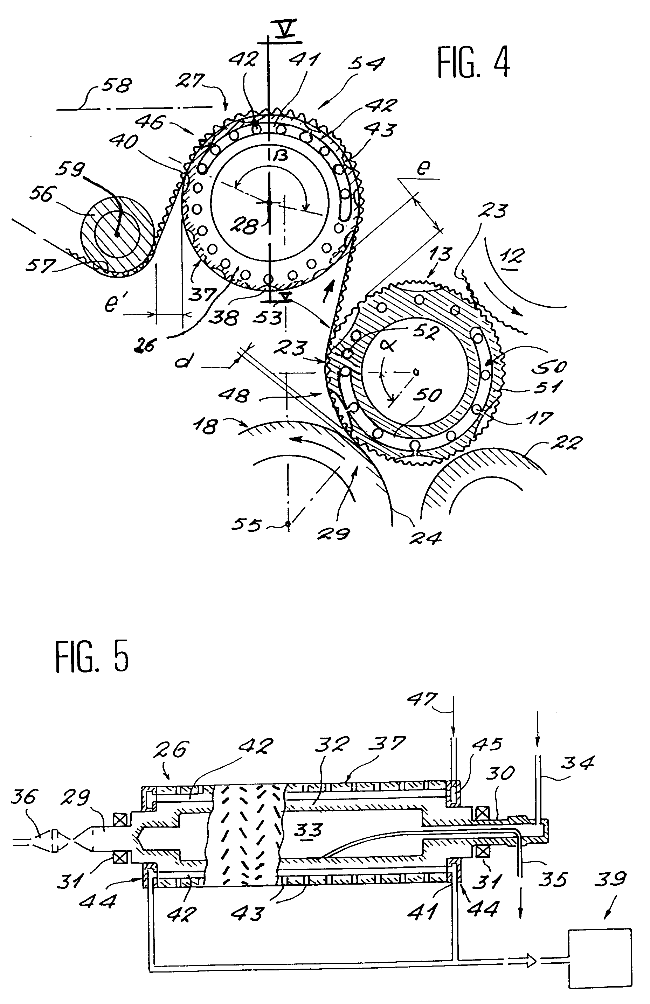

La machine selon le mode de réalisation de l'invention plus particulièrement décrit ici comprend d'une part une machine simple face du type décrit en référence à la figure 2, et d'autre part un quatrième cylindre qui va être décrit en référence aux figures 4 et 5.

Pour simplifier, les mêmes numéros de référence sont utilisés quand ils désignent les mêmes éléments.

En plus des premier, deuxième et troisième cylindres 12, 13 et 18, la machine selon l'invention comporte donc un quatrième cylindre 26, chauffant, muni d'un système 27 d'application par aspiration qui sera décrit plus avant.

Le cylindre 26 est d'axe 28, parallèle aux axes des précédents cylindres et situé au-dessus de ces derniers, par exemple directement après le deuxième cylindre sur le trajet de la feuille de carton ondulé.

Le cylindre 26 est par ailleurs chauffé à la vapeur de façon similaire aux autres cylindres, par exemple pour atteindre une température de peau du cylindre comprise entre 160°C et 200°C.

Il est constitué par un tube évidé en acier inoxydable et présente par exemple un diamètre externe identique aux autres.

Plus précisément (voir figure 5) le cylindre 26 est par exemple ici encore du type "Air Drive", fabriqué par la société française MARTIN et connu sous la référence M 260. Il comprend deux extrémités 29 et 30, montées sur palliers 31, et un corps cylindrique 32, muni d'un évidement cylindrique central 33 alimenté en vapeur en 34 par une de ses extrémités 30. Un canal 35 d'évacuation des condensats est également prévu à cette extrémité.

L'autre extrémité 29 du cylindre 26 comporte des moyens 36 d'entrainement en rotation, par moteur à vitesse de fonctionnement nominal fixe par rapport à la vitesse du deuxième rouleau de la machine simple face.

La surface 37 de la périphérie du corps cylindrique 32 est lisse. Par surface lisse, il convient d'entendre une surface cylindrique plane non cannelée, pouvant cependant présenter de légers renfoncements ou lunules 38, par exemple en forme de fentes rectangulaires de 40 mm de longueur sur 2,5 mm de largeur et dont le fond est en forme de portion de cylindre à grand rayon de courbure. Sur un cylindre comme le cylindre "Air Drive" de l'entreprise MARTIN, les renfoncements occupent en général moins de 5 % de la surface du cylindre, par exemple 2,8 % et sont connectés à des moyens 39 de mise sous vide via deux chambres en arc de cercle 41 reliées à des canaux longitudinaux périphériques 42 répartis angulairement et connectés régulièrement aux lunules 38 via des petits canaux radiaux 43. Les chambres 41 appartiennent respectivement à deux couronnes fixes 44 de répartition prévues de part et d'autre du cylindre 26 avec lequel elles coopèrent en rotation, à frottement, de façon sensiblement étanche, par leur paroi latérale.

Un dispositif casse vide 45 et/ou de décollage du carton 46 par injection d'air comprimé 47 dans les canaux 42, en vis-à-vis du point 40, est par ailleurs avantageusement prévu de façon connue en elle-même.

La traction sur la feuille de carton ondulé est assurée grace à la vitesse supérieure du cylindre aspirant 26, sur lequel est plaquée la feuille de couverture du carton ondulé sans possibilité ou pratiquement sans possibilité de glissement.

Avec une machine ainsi modifiée, le collage est différent du collage classique. Au lieu de réaliser le joint de colle instantanément par action combinée de la chaleur et d'une forte pression, le collage est assuré essentiellement par la chaleur et sous traction longitudinale dans le sens du défilement, la pression étant réduite de façon importante, voire supprimée.

Le séchage de la colle s'effectue en deux zones :
- une première zone de contact 48 entre la feuille cannelée 23 et la feuille de couverture 24, où les deux feuilles sont maintenues l'une contre l'autre sur le cylindre cannelé central 13 sur un angle d'enroulement alpha, par exemple d'environ 60°.

Dans le mode de réalisation plus particulièrement décrit ici, l'espace entre le cylindre cannelé 13, central, et le troisième cylindre 18, lisse, au point de contact ou de jonction 29 des deux feuilles, est supérieur à l'épaisseur maximum d'une feuille de carton ondulé à traiter, de manière à ce que la pression soit nulle quelque soit les papiers.

Avantageusement, l'aspiration de la feuille de carton ondulé sur le cylindre cannelé central 13 se poursuit en aval du point de contact 29 grâce à l'allongement sur un arc de l'ordre de 60°, de la chambre 50 appartenant à la bague 51 représentée schématiquement sur la figure 4 et qui est du type de la couronne 44 décrite en référence au cylindre 26.

Un dispositif casse vide et /ou de décollage du carton (non représenté) connu en lui-même, est également prévu de façon similaire au point de décallage 53 de la feuille de carton ondulé;
- une seconde zone de contact 54, où les deux feuilles sont à nouveau maintenues l'une contre l'autre mais cette fois-ci sur le cylindre 26 sur un angle d'enroulement béta, par exemple de 180°, ce qui permet de compléter la gélatinisation et le séchage de la colle.

V étant la vitesse de défilement du carton, V1 la vitesse extérieure du cylindre est par exemple égale à 1,05 en nominal, de façon non réglable.

Dans le mode de réalisation plus particulièrement décrit ici, et afin de maintenir la feuille de carton ondulé du côté cannelé, en contact avec la surface cannelée du cylindre 13 sur un angle alpha, le cylindre 26 présente également au moins par rapport au plan tangent au point de contact 29 avec le cylindre 13, une partie de sa surface du côté dudit cylindre 13.

Pour ce faire, l'axe 28 du cylindre 26 peut également être situé du côté du cylindre 13, par rapport au plan vertical passant par l'axe 55 du cylindre lisse 18.

Un petit rouleau 56 non chauffant, lisse et plein, connu en lui-même, et propre à être en contact avec la feuille du carton ondulé, du côté ondulé, est par ailleurs pour exemple prévu avant renvoi vers la table d'évacuation de la feuille de carton ondulé formée en partie haute.

Il présente par exemple une génératrice inférieure 57 située en-dessous du plan horizontal 58 tangent à la génératrice supérieure du cylindre 26.

Avantageusement l'axe 59 du cylindre 56 est situé en-dessous de l'axe 28 du cylindre 26, et sa position est réglable verticalement pour permettre de modifier l'angle d'enroulement bêta.

Des distances suffisantes e et e' entre parois latérales, respectivement des cylindres 13 et 26, et 26 et 56 sont par ailleurs prévues pour permettre un bon déroulement de la feuille de carton ondulé formée.

On va maintenant décrire le fonctionnement de la machine selon le mode de réalisation de l'invention plus particulièrement décrit ici.

La feuille précannelée par le premier cylindre chauffant 12 est engrenée sur le deuxième cylindre cannelé 13 qui l'aspire de façon connue en elle-même, comme décrit ci-avant sur un angle au centre correspond à de l'ordre de 240°, soit 180° jusqu'au point 29 de contact avec la feuille plane amenée en vis-à-vis par le cylindre lisse 18, également chauffant, et de l'ordre de 60° (angle alpha) en aval dudit point de contact 29.

La feuille de carton ondulé formée par la feuille cannelée préalablement encollée et la feuille plane reste donc en contact avec le cylindre chauffant 13 jusqu' au point 53, où le décollage de la feuille est favorisé par un jet d'air comprimé.

La feuille de carton ondulé est ensuite reprise par le quatrième cylindre 26, lisse, chauffant et aspirant, la feuille de couverture étant du côté de la surface dudit cylindre, par ailleurs actionné à une vitesse un peu supérieure à celle du deuxième cylindre pour constituer les moyens d'entraînement positif par traction sur ladite feuille de carton ondulé en aval du point 29.

Celle-ci est aspirée par les trous de la surface du cylindre 26, par exemple sur 180°, avant décollement par jet soufflant, déviation par le rouleau 56 et évacuation.

La force de traction exercée sur le carton ondulé par les moyens d'entrainement positif est supérieure à de l'ordre de 4 N/cm, par exemple de l'ordre de 5 N/cm ou de l'ordre de 8 N/cm.

Grâce à l'invention, on a pu constater une amélioration significative des caractéristiques du carton ondulé simple face produit.

On a représenté sur les lignes 6, 7 et 8, à titre d'exemples, des courbes donnant la résistance à l'écrasement à plat ou à l'éclatement en fonction de la vitesse, pour des vitesses de défilement comprises entre 100 et 230m/mn, pour trois qualités de carton double face différentes, dont la feuille de base simple face a été obtenue à partir d'une machine de l'art antérieur telle que décrite en référence aux figures 1 à 3 (en trait interrompu), et avec une machine selon le mode de réalisation de l'invention plus particulièrement décrit ici correspondant aux figures 4 et 5 (en trait plein).

La résistance est exprimée en kilo-pascal.

Les références des papiers utilisés sont dans l'ordre, les spécifications de la feuille plane de couverture, de la feuille cannelée, et de la deuxième feuille plane complétant la simple face, pour former la feuille double face.

Les lettres majuscules de désignation correspondent à la norme française NF Q 01005 et notamment:
T désigne du papier communément appelé Test Liner par l'homme du métier;
K désigne du papier connu sous la denomination papier KRAFT;
C désigne du papier cannelé recyclé
H désigne du papier cannelé recyclé traité, et
R désigne du papier ordinaire pour cannelures.

Le chiffre figurant après la lettre majuscule donne le grammage du papier en gramme par m2.

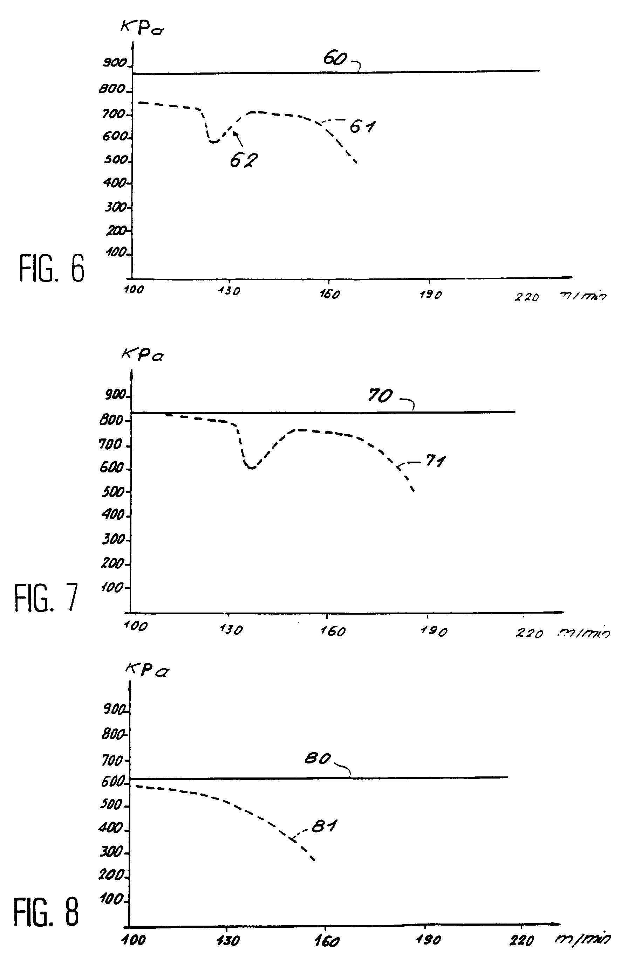

La figure 6 concerne un papier de qualité T150/C110/T150.

Avec l'invention (courbe 60) les caractéristiques de résistance à l'éclatement sont sensiblement conservées quelque soit la vitesse dans la plage examinée.

L'invention permet ainsi un gain de + 12% à 100 m/mm et de +20% à 160 m/mm, par rapport à ce que l'on obtient avec une machine classique (courbe 61) dite à Presse lisse.

Dans le cas d'une machine classique, le carton obtenu dans la zone de vibration (zone 62) présente par ailleurs une moins bonne tenue, et la limite de production est rapidement atteinte en dessous de 160 m/mm, contrairement au carton obtenu avec l'invention qui concerve sensiblement ses caractéristiques au-delà de 200 m/mm, et ne voit pas ses qualités modifiées dans la zone de vibration.

Les figures 7 et 8 concernent deux autres qualités de carton, à savoir des feuilles de carton ondulé T200/H150/T200 et R100/C110/R100.

Les courbes obtenues respectivement 70 et 71, et 80 et 81, attirent les mêmes remarques que les courbes 60 et 61 ci-dessus.

Comme il va de soi et comme il résulte d'ailleurs de ce qui précède, la présente invention ne se limite pas au mode de réalisation plus particulièrement envisagé. Elle concerne également et notamment les cas où les moyens d'entrainement positif exerçant une traction et situés entièrement en aval du deuxième cylindre, sont des moyens de pincement entre rouleaux en matière élastique, des moyens d'entrainement par courroie en appui sur une tôle plane ou cylindrique, ou sur une autre courroie, et les cas où les moyens de chauffage complémentaires sont constitués par une table chauffante ou par un sécheur électrique ou un sécheur à infrarouge.

## Revendications

1. Machine (1) de fabrication d'une feuille de carton ondulé simple face par encollage d'une feuille cannelée (23) de carton sur une feuille plane (24) de carton, comprenant
trois cylindres chauffants sensiblement tangents deux à deux, d'axes parallèles, à savoir un premier cylindre (12) cannelé, de préformation de la feuille cannelée, un deuxième cylindre (13), cannelé, central, associé à des moyens (16, 17) d'application de la feuille cannelée contre la paroi externe dudit deuxième cylindre en amont du premier contact (29) entre feuille plane et feuille cannelée, et un troisième cylindre (18), lisse, d'amenée de la feuille plane en contact avec les cannelures de la feuille cannelée à la périphérie dudit deuxième cylindre,
des moyens (19) d'encollage desdites cannelures avant ledit contact,
et des moyens de frottement (26) agissant sur la feuille en aval desdits cylindres (12, 13, 18),
caractérisée en ce que elle comporte de plus des moyens (26) d'entraînement positif par traction de la feuille plane de carton ondulé en plus de la force de frottement entre lesdits moyens (26) et ladite feuille plane de carton ondulé, l'ensemble des forces de traction et de frottement étant supérieur ou égal à de l'ordre de 4N/cm,
lesdits moyens (26) d'entraînement positif étant situés entièrement en aval du trajet du carton ondulé par rapport aux trois cylindres, lesdits moyens d'entraînement positif et le deuxième cylindre étant agencés pour plaquer la feuille cannelée sur la paroi externe dudit deuxième cylindre en aval dudit premier contact (29) entre feuille plane et feuille cannelée, selon un arc de cercle correspondant à un angle au centre alpha d'une première valeur déterminée, lesdits moyens d'entraînement positif étant associés à des moyens (34) de chauffage complémentaire dudit carton ondulé.

2. Machine selon la revendication 1, caractérisée en ce que les moyens de chauffage complémentaire dudit carton ondulé sont dissociés des moyens de traction positive et situés en amont des moyens d'entraînement positif.

3. Machine selon la revendication 1, caractérisée en ce que les moyens (26) d'entraînement positif par traction de la feuille de carton ondulé et les moyens complémentaires de chauffage comprennent un quatrième cylindre (26) chauffant, muni de moyens d'application de la feuille de carton ondulé contre la paroi externe dudit quatrième cylindre, d'axe (28) parallèle aux autres cylindres, ledit quatrième cylindre étant agencé pour être lui-même en contact avec le dos de la feuille plane sur un arc de cercle correspondant à un angle au centre bêta d'une seconde valeur déterminée.

4. Machine selon la revendication 3, caractérisée en ce que la seconde valeur déterminée est comprise entre de l'ordre de 90° et de l'ordre de 270°.

5. Machine selon la revendication 4, caractérisée en ce que la seconde valeur déterminée est de l'ordre de 180°.

6. Machine selon l'une quelconque des revendications 3 à 5, caractérisée en ce que les moyens d'application associés au quatrième cylindre sont des moyens (39) d'aspiration du carton ondulé, par l'intermédiaire d'orifices (43) percés dans la surface de la paroi dudit quatrième cylindre.

7. Machine selon l'une quelconque des revendications 3 à 6, caractérisée en ce que les moyens d'entraînement positif comportent des moyens d'actionnement en rotation du quatrième cylindre à une vitesse déterminée comprise entre de l'ordre de 1 et de l'ordre de 1,05 fois la vitesse de rotation du deuxième cylindre.

8. Machine selon l'une quelconque des revendications 3 à 7, caractérisée en ce que elle comporte de plus un cylindre lisse de petit diamètre, d'axe parallèle à l'axe desdits cylindres chauffants, situé en aval desdits cylindres sur le trajet du carton ondulé et en dessous du plan horizontal tangent à la génératrice supérieure du quatrième cylindre.

9. Machine selon l'une quelconque des revendications 4 à 8, caractérisée en ce que le quatrième cylindre (26) est agencé pour permettre le réglage de l'angle bêta d'enroulement de la feuille de carton ondulé sur ledit quatrième cylindre.

10. Machine selon l'une quelconque des revendications 1 à 9, caractérisée en ce que la première valeur déterminée alpha est supérieure à de l'ordre de 30°.

11. Machine selon la revendication 10, caractérisée en ce que la première valeur déterminée alpha est supérieure à de l'ordre de 100°.

12. Machine selon l'une quelconque des revendications 1 à 9, caractérisée en ce que la première valeur déterminée correspond à une dimension d'arc en surface du deuxième cylindre supérieure à de l'ordre de 50 mm.

13. Machine selon l'une quelconque des revendications précédentes, caractérisée en ce que elle comporte des moyens de réglage de la pression exercée sur la feuille de carton ondulée au niveau du deuxième cylindre, par le troisième cylindre lisse, en dessous d'une valeur seuil déterminée de 3 kg/cm.

14. Machine selon l'une quelconque des revendications précédentes, caractérisée en ce que elle comporte des moyens de réglage de la distance entre les surfaces des deuxième et troisième cylindres, lesdits moyens étant agencés pour supprimer toute pression du troisième cylindre sur les feuilles cannelée et plane de couverture de la feuille ondulée, en contact avec le deuxième cylindre, en cours de fonctionnement de la machine.

15. Machine selon l'une quelconque des revendications précédentes, caractérisée en ce que les moyens d'entraînement positif et le deuxième cylindre sont agencés pour permettre le réglage de l'angle alpha d'enroulement de la feuille de carton ondulé sur le deuxième cylindre.

16. Procédé de fabrication d'une feuille de carton ondulé simple face, à partir d'une feuille (23) de carton cannelée et d'une feuille (24) plane de carton, dite de couverture, par encollage de l'une sur l'autre, dans lequel on exerce des forces de frottement sur la feuille plane en aval du trajet du carton ondulé par rapport à un cylindre cannelé central, dit deuxième cylindre, caractérisé en ce que on maintient en contact les crêtes des cannelures de la feuille ondulée préalablement encollées avec la feuille plane sur une première zone (48) formée par une portion de surface dudit deuxième cylindre, cannelé, central, chauffant, en plaquant ladite feuille cannelée de la feuille de carton ondulé contre ladite première portion de surface, en aval du premier contact (29) entre feuille plane et feuille cannelée, sur un arc correspondant à un angle au centre alpha d'une première valeur déterminée,
en exerçant une traction en plus desdites forces de frottement, tel que l'ensemble des forces de traction et de frottement est supérieur ou égal à de l'ordre de 4N/cm, sur la feuille plane de carton ondulé par entraînement positif de la feuille de carton ondulé en aval du trajet dudit carton ondulé par rapport audit deuxième cylindre, cannelé, central, et on chauffe de façon complémentaire la feuille de carton ondulé sur le trajet de ladite feuille situé en aval par rapport au deuxième cylindre, cannelé, central.

17. Procédé selon la revendication 16, caractérisé en ce que on exerce ladite traction et on chauffe de façon complémentaire par l'intermédiaire d'un quatrième cylindre (26) chauffant, rotatif, situé en aval du trajet du carton ondulé par rapport audit deuxième cylindre, cannelé, central, en plaquant ladite feuille de couverture contre une portion de surface dudit quatrième cylindre, sur un arc correspondant à un angle au centre bêta d'une seconde valeur déterminée.

18. Procédé selon la revendication 17, caractérisé en ce que la seconde valeur déterminée est comprise entre de l'ordre de 90° et de l'ordre de 270°.

19. Procédé selon la revendication 18, caractérisé en ce que la seconde valeur déterminée est de l'ordre de 180°.

20. Procédé selon l'une quelconque des revendications 17 à 19, caractérisé en ce que la vitesse dudit quatrième cylindre est comprise entre de l'ordre de 1 et 1,05 fois la vitesse de rotation dudit deuxième cylindre cannelé central.

21. Procédé selon l'une quelconque des revendications 16 à 20, caractérisé en ce que la première valeur déterminée est supérieure à de l'ordre de 30°.

22. Procédé selon la revendication 21, caractérisé en ce que la première valeur déterminée est supérieure à de l'ordre de 100°.

23. Procédé selon l'une quelconque des revendications 16 à 22, caractérisé en ce que aucune pression externe est exercée par les moyens d'amenée de la feuille plane de couverture pour encollage sur la feuille cannelée, au niveau du deuxième cylindre, cannelé, central.

24. Procédé selon l'une quelconque des revendications 16 à 23, caractérisé en ce que on règle l'angle alpha d'enroulement de la feuille de carton ondulé sur le deuxième cylindre, cannelé, central.

## Claims

1. Machine (1) for the manufacture of a sheet of single-faced corrugated cardboard by sticking a fluted sheet (23) of cardboard on to a flat sheet (24) of cardboard, comprising
three heating cylinders substantially tangential in pairs, with parallel axes, namely a fluted first cylinder (12), for the preforming of the fluted sheet, a central fluted second cylinder (13), associated with means (16, 17) for applying the fluted sheet against the outer wall of the said second cylinder upstream from the first contact (29) between the flat sheet and the fluted sheet, and a smooth third cylinder (18), for bringing the flat sheet into contact with the flutings of the fluted sheet at the periphery of the said second cylinder,
means (19) for spreading adhesive over the said flutings before the said contact,
and frictional means (26) acting on the sheet downstream from the said cylinders (12, 13, 18),
characterised in that it also comprises means (26) for the positive drive by traction of the flat sheet of corrugated cardboard in addition to the frictional force between the said means (26) and the said flat sheet of corrugated cardboard, the sum of the traction and frictional forces being greater than or equal to a value of the order of 4N/cm,
the said positive drive means (26) being located entirely downstream, on the path of the corrugated cardboard, from the three cylinders, the said positive drive means and the second cylinder being positioned so as to flatten the fluted sheet on to the outer wall of the said second cylinder downstream from the said first contact (29) between the flat sheet and the fluted sheet, along a circular arc corresponding to an angle alpha at the centre with a first predetermined value, the said positive drive means being associated with complementary means (34) for heating the said corrugated cardboard.

2. Machine according to Claim 1, characterised in that the complementary means for heating the said corrugated cardboard are separate from the positive traction means and are located upstream from the positive drive means.

3. Machine according to Claim 1, characterised in that the means (26) for the positive drive by traction of the sheet of corrugated cardboard and the complementary means for heating comprise a fourth heating cylinder (26), provided with means for applying the sheet of corrugated cardboard against the outer wall of the said fourth cylinder, with axis (28) parallel to the other cylinders, the said fourth cylinder being positioned so as to be itself in contact with the back of the flat sheet over a circular arc corresponding to an angle beta at the centre with a second predetermined value.

4. Machine according to Claim 3, characterised in that the second predetermined value lies between a value of the order of 90° and one of the order of 270°.

5. Machine according to Claim 4, characterised in that the second predetermined value is of the order of 180°.

6. Machine according to any one of Claims 3 to 5, characterised in that the means of application associated with the fourth cylinder are means (39) for suction of the corrugated cardboard through the intermediary of orifices (43) pierced in the surface of the wall of the said fourth cylinder.

7. Machine according to any one of Claims 3 to 6, characterised in that the positive drive means comprise means for rotationally driving the fourth cylinder at a predetermined speed lying between a value of the order of 1 and one of the order of 1.05 times the rotational speed of the second cylinder.

8. Machine according to any one of Claims 3 to 7, characterised in that it also comprises a smooth cylinder of small diameter, with axis parallel to the axis of the said heating cylinders, located downstream from the said cylinders on the path of the corrugated cardboard and below the horizontal plane tangential to the upper generator of the fourth cylinder.

9. Machine according to any one of Claims 4 to 8, characterised in that the fourth cylinder (26) is positioned to allow the adjustment of the angle beta defining the winding of the sheet of corrugated cardboard on the said fourth cylinder.

10. Machine according to any one of Claims 1 to 9, characterised in that the first predetermined value alpha is greater than a value of the order of 30°.

11. Machine according to Claim 10, characterised in that the first predetermined value alpha is greater than a value of the order of 100°.

12. Machine according to any one of Claims 1 to 9, characterised in that the first predetermined value corresponds to a size of the arc on the surface of the second cylinder greater than a value of the order of 50 mm.

13. Machine according to any one of the preceding claims, characterised in that it comprises means for adjusting the pressure exerted on the sheet of corrugated cardboard at the level of the second cylinder by the smooth third cylinder below a predetermined threshold value of 3 kg/cm.

14. Machine according to any one of the preceding claims, characterised in that it comprises means for adjusting the distance between the surfaces of the second and third cylinders, the said means being positioned to eliminate any pressure of the third cylinder on the fluted and flat liner sheets of the corrugated sheet, in contact with the second cylinder, during the functioning of the machine.

15. Machine according to any one of the preceding claims, characterised in that the positive drive means and the second cylinder are positioned to allow the adjustment of the angle alpha defining the winding of the sheet of corrugated cardboard on the second cylinder.

16. Method for the manufacture of a sheet of single-faced corrugated cardboard, from a sheet (23) of fluted cardboard and a flat sheet (24) of cardboard, called the liner, by sticking one on to the other, in which frictional forces are exerted on the flat sheet downstream, on the path of the corrugated cardboard, from a central fluted cylinder, called the second cylinder, characterised in that the peaks of the flutings of the corrugated sheet previously coated with adhesive are maintained in contact with the flat sheet over a first zone (48) formed by a surface portion of the said central fluted second heating cylinder by flattening the said fluted sheet of the sheet of corrugated cardboard against the said first surface portion, downstream from the first contact (29) between flat sheet and fluted sheet, over an arc corresponding to an angle alpha at the centre with a first predetermined value, also by exerting a traction from the said frictional forces, such that the sum of the traction and frictional forces is greater than or equal to a value of the order of 4N/cm, on the flat sheet of corrugated cardboard by a positive drive of the sheet of corrugated cardboard on the path of the said corrugated cardboard downstream from the central fluted second cylinder, and the sheet of corrugated cardboard is heated in a complementary manner over the path of the said sheet located downstream from the central fluted second cylinder.

17. Method according to Claim 16, characterised in that the said traction is exerted and the complementary heating is carried out through the intermediary of a rotating fourth heating cylinder (26), located on the path of the corrugated cardboard downstream from the said central fluted second cylinder, by flattening the said liner sheet against a portion of the surface of the said fourth cylinder, over an arc corresponding to an angle beta at the centre having a second predetermined value.

18. Method according to Claim 17, characterised in that the second predetermined value lies between a value of the order of 90° and one of the order of 270°.

19. Method according to Claim 18, characterised in that the second predetermined value is of the order of 180°.

20. Method according to any one of Claims 17 to 19, characterised in that the speed of the said fourth cylinder lies between a value of the order of 1 and 1.05 times the rotational speed of the central fluted second cylinder.

21. Method according to any one of Claims 16 to 20, characterised in that the first predetermined value is greater than a value of the order of 30°.

22. Method according to Claim 21, characterised in that the first predetermined value is greater than a value of the order of 100°.

23. Method according to any one of Claims 16 to 22, characterised in that no external pressure is exerted by the means for bringing the flat liner sheet for sticking on to the fluted sheet at the level of the central fluted second cylinder.

24. Method according to any one of Claims 16 to 23, characterised in that the angle alpha defining the winding of the sheet of corrugated cardboard on the central fluted second cylinder is adjusted.

## Patentansprüche

1. Maschine (1) zur Herstellung eines Bogens einseitiger Wellpappe durch Aufkleben eines Riffelbogens (23) aus Karton auf einen Flachbogen (24) aus Karton, enthaltend
drei im wesentlichen paarweise einander berührende Heizzylinder mit parallelen Achsen, nämlich einen ersten Riffelzylinder (12) zur Vorformung des Riffelbogens, einen zweiten, mittig angeordneten Riffelzylinder (13), der mit Mitteln (16, 17) zum Anlegen des Riffelbogens an die Außenwand des genannten zweiten Zylinders im Ablauf vor dem ersten Kontakt (29) zwischen dem Flachbogen und dem Riffelbogen verbunden ist, und einen dritten, glatten Zylinder (18) zur Zuführung des Flachbogens, so daß er mit den Riffelungen des Riffelbogens am Umfang des zweiten Zylinders in Kontakt gebracht wird,
Mittel (19) zum Einleimen der Riffelungen vor dem genannten Kontakt,
sowie Reibmittel (26), die im Ablauf nach den genannten Zylindern (12, 13, 18) auf den Bogen wirken,
dadurch gekennzeichnet, daß
sie außerdem zwangsläufige Antriebsmittel (26) durch Zugkraft für den Flachbogen der Wellpappe enthält, die zusätzlich zur Reibungskraft zwischen den genannten Mitteln (26) und dem genannten Flachbogen dem- Wellpappe wirken, wobei die Gesamtheit der Kräfte aus Zug und Reibung größer oder gleich einem Wert in der Größenordnung von 4 N/cm ist,
und die genannten zwangsläufigen Antriebsmittel (26) vollständig im Ablauf nach dem Weg der Wellpappe um die drei Zylinder angeordnet sind, wobei die genannten zwangsläufigen Antriebsmittel und der zweite Zylinder so ausgelegt sind, daß sie den Riffelbogen an die Außenwand des genannten zweiten Zylinders anlegen, was im Ablauf nach dem genannten ersten Kontakt (29) zwischen dem Flachbogen und dem Riffelbogen gemäß einem Kreisbogen erfolgt, der einem Mittelpunktwinkel Alpha mit einem ersten definierten Wert entspricht, und wobei die zwangsläufigen Antriebsmittel mit Mitteln (34) zur ergänzenden Beheizung der genannten Wellpappe verbunden sind.

2. Maschine nach Anspruch 1, dadurch gekennzeichnet, daß die ergänzenden Heizmittel für die genannte Wellpappe von den Mitteln zur zwangsläufigen Zugbewegung getrennt und im Ablauf vor den zwangsläufigen Antriebsmitteln angeordnet sind.

3. Maschine nach Anspruch 1, dadurch gekennzeichnet, daß die Mittel (26) zur zwangsläufigen Bewegung des Wellpappebogens durch Zugkraft und die ergänzenden Heizmittel einen vierten Heizzylinder (26) aufweisen, der mit Mitteln zum Anlegen des Wellpappebogens an die Außenwand des genannten vierten Zylinders, dessen Achse (28) parallel zu den Achsen der anderen Zylinder verläuft, ausgestattet ist, wobei der vierte Zylinder so ausgelegt ist, daß er selbst auf einem Kreisbogen, welcher einem Mittelpunktwinkel Beta mit einem zweiten definierten Wert entspricht, mit dem Rücken des Flachbogens in Kontakt ist.

4. Maschine nach Anspruch 3, dadurch gekennzeichnet, daß der zweite definierte Wert zwischen einem Wert in der Größenordnung von 90° und einem Wert in der Größenordnung von 270° liegt.

5. Maschine nach Anspruch 4, dadurch gekennzeichnet, daß der zweite definierte Wert in der Größenordnung von 180° liegt.

6. Maschine nach einem der Ansprüche 3 bis 5, dadurch gekennzeichnet, daß es sich bei den mit dem vierten Zylinder verbundenen Mitteln zum Anlegen um Mittel (39) zum Ansaugen der Wellpappe über mittels in die Oberfläche der Wand des vierten Zylinders gebohrte Öffnungen (43) handelt.

7. Maschine nach einem der Ansprüche 3 bis 6, dadurch gekennzeichnet, daß die zwangsläufigen Antriebsmittel Mittel zur Drehbewegung des vierten Zylinders mit einer festgelegten Geschwindigkeit, die zwischen einem Wert in der Größenordnung von 1 und einem Wert in der Größenordnung von 1,05 mal der Drehgeschwindigkeit des zweiten Zylinders liegt, enthalten.

8. Maschine nach einem der Ansprüche 3 bis 7, dadurch gekennzeichnet, daß sie außerdem einen glatten Zylinder mit geringem Durchmesser und parallel zu den Achsen der Heizzylinder verlaufender Achse aufweist, der im Ablauf nach den genannten Zylindern entlang des Weges der Wellpappe und unterhalb der horizontalen Ebene, die tangential zur oberen Erzeugenden des vierten Zylinders verläuft, angeordnet ist.

9. Maschine nach einem der Ansprüche 4 bis 8, dadurch gekennzeichnet, daß der vierte Zylinder (26) so ausgelegt ist, daß er die Einstellung des Bewicklungswinkels Beta des Wellpappebogens auf dem genannten vierten Zylinder erlaubt.

10. Maschine nach einem der Ansprüche 1 bis 9, dadurch gekennzeichnet, daß der erste definierte Wert Alpha größer als ein Wert in der Größenordnung von 30° ist.

11. Maschine nach Anspruch 10, dadurch gekennzeichnet, daß der erste definierte Wert größer als ein Wert in der Größenordnung von 100° ist.

12. Maschine nach einem der Ansprüche 1 bis 9, dadurch gekennzeichnet, daß der erste definierte Wert einer Bogenlänge auf der Fläche des zweiten Zylinders entspricht, welche die Größenordnung von 50 mm übersteigt.

13. Maschine nach einem der vorhergehenden Ansprüche, dadurch gekennzeichnet, daß sie Mittel zur Einstellung des auf der Höhe des zweiten Zylinders durch den dritten, glatten Zylinder auf den Wellpappebogen ausgeübten Druckes unterhalb eines festgelegten Schwellenwertes von 3 kg/cm aufweist.

14. Maschine nach einem der vorhergehenden Ansprüche, dadurch gekennzeichnet, daß sie Mittel zur Einstellung des Abstandes zwischen den Oberflächen des zweiten und des dritten Zylinders enthält, wobei die genannten Mittel so ausgelegt sind, daß sie während des Betriebes der Maschine jeden Druck des dritten Zylinders auf den Riffelbogen und den als Deckbogen der Wellpappe verwendeten Flachbogen beim Kontakt mit dem zweiten Zylinder vermeiden.

15. Maschine nach einem der vorhergehenden Ansprüche, dadurch gekennzeichnet, daß die zwangsläufigen Antriebsmittel und der zweite Zylinder so ausgelegt sind, daß sie die Einstellung des Bewicklungswinkels Alpha für den Wellpappebogen auf dem zweiten Zylinder erlauben.

16. Verfahren zur Herstellung eines einseitigen Wellpappebogens, ausgehend von einem Riffelbogen (23) aus Karton und einem Flachbogen (24) aus Karton, dem sogenannten Deckbogen, durch Verleimung der beiden Bögen aufeinander, wobei im Ablauf nach dem Weg der Wellpappe um den mittleren Riffelzylinder, dem sogenannten zweiten Zylinder, Reibungskräfte auf den Flachbogen ausgeübt werden, dadurch gekennzeichnet, daß die Wellenkämme des zuvor eingeleimten Wellpappebogens in einem ersten, durch einen Oberflächenabschnitt des genannten zweiten, mittleren, geriffelten Heizzylinders gebildeten Bereich (48) in Kontakt mit dem Flachbogen gehalten werden, wobei der genannte Riffelbogen des Wellpappebogens am genannten ersten Oberflächenabschnitt angelegt wird, was im Ablauf nach dem ersten Kontakt (29) zwischen dem Flachbogen und dem Riffelbogen auf einem Kreisbogen stattfindet, der einem Mittelpunktwinkel Alpha mit einem ersten definierten Wert entspricht, und wobei zusätzlich zu den genannten Reibungskräften eine Zugkraft ausgeübt wird, so daß die Gesamtheit der auf den Flachbogen der Wellpappe wirkenden Kräfte aus Zug und Reibung durch zwangsläufige Bewegung des Wellpappebogens im Ablauf nach dem Weg der genannten Wellpappe um den zweiten, mittleren Riffelzylinder größer oder gleich einem Wert in der Größenordnung von 4 N/cm ist, wobei der Wellpappebogen auf dem Weg des genannten Bogens nach dem zweiten, mittleren Riffelzylinder zusätzlich beheizt wird.

17. Verfahren nach Anspruch 16, dadurch gekennzeichnet, daß mittels eines vierten, drehbaren Heizzylinders (26), der im Ablauf nach dem Weg der Wellpappe um den zweiten, mittleren Riffelzylinder angeordnet ist, die genannte Zugkraft ausgeübt wird und eine zusätzliche Beheizung erfolgt, wobei der genannte Deckbogen an einen Oberflächenabschnitt des genannten vierten Zylinders auf einem Kreisbogen angelegt wird, der einem Mittelpunktwinkel Beta mit einem zweiten definierten Wert entspricht.

18. Verfahren nach Anspruch 17, dadurch gekennzeichnet, daß der zweite definierte Wert zwischen einem Wert in der Größenordnung von 90° und einem Wert in der Größenordnung von 270° liegt.

19. Verfahren nach Anspruch 18, dadurch gekennzeichnet, daß der zweite definierte Wert in der Größenordnung von 180° liegt.

20. Verfahren nach einem der Ansprüche 17 bis 19, dadurch gekennzeichnet, daß die Geschwindigkeit des genannten vierten Zylinders zwischen einem Wert in der Größenordnung von 1 und einem Wert in der Größenordnung von 1,05 mal der Drehgeschwindigkeit des zweiten, mittleren Riffelzylinders liegt.

21. Verfahren nach einem der Ansprüche 16 bis 20, dadurch gekennzeichnet, daß der erste definierte Wert über einem Wert in der Größenordnung von 30° liegt.

22. Verfahren nach Anspruch 21, dadurch gekennzeichnet daß der erste definierte Wert über einem Wert in der Größenordnung von 100° liegt.

23. Verfahren nach einem der Ansprüche 16 bis 22, dadurch gekennzeichnet daß durch die Mittel zum Zuführen des flachen Deckbogens, zum Verleimen auf dem Riffelbogen auf Höhe des zweiten, mittleren Riffelzylinders. kein äußerer Druck ausgeübt wird.

24. Verfahren nach einem der Ansprüche 16 bis 23, dadurch gekennzeichnet, daß der Bewicklungswinkel Alpha des Wellpappebogens auf dem zweiten, mittleren Riffelzylinder eingestellt wird.
